(19) Europäisches Patentamt
European Patent Office
Office européen des brevets

(11) **EP 1 769 116 B1**

(12) **EUROPEAN PATENT SPECIFICATION**

(45) Date of publication and mention
of the grant of the patent:
**11.05.2016 Bulletin 2016/19**

(51) Int Cl.:
*D06F 39/00* (2006.01)   *C02F 1/42* (2006.01)
*C02F 1/469* (2006.01)

(21) Application number: **05716579.7**

(22) Date of filing: **12.04.2005**

(86) International application number:
**PCT/EP2005/003999**

(87) International publication number:
**WO 2005/106100 (10.11.2005 Gazette 2005/45)**

(54) **CLEANING METHOD**

SÄUBERUNGSVERFAHREN

PROCÉDÉ DE NETTOYAGE

(84) Designated Contracting States:
**AT BE BG CH CY CZ DE DK EE ES FI FR GB GR
HU IE IS IT LI LT LU MC NL PL PT RO SE SI SK TR**

(30) Priority: **05.05.2004 EP 04076353**

(43) Date of publication of application:
**04.04.2007 Bulletin 2007/14**

(73) Proprietors:
• **Unilever N.V.**
**3013 AL Rotterdam (NL)**
Designated Contracting States:
**AT BE BG CH CZ DE DK EE ES FI FR GR HU IS IT
LI LT LU MC NL PL PT RO SE SI SK TR**
• **Unilever PLC**
**London**
**EC4Y 0DY (GB)**
Designated Contracting States:
**CY GB IE**

(72) Inventors:
• **VAN KRALINGEN, C. G.,**
**Unilever R & D Vlaardingen**
**NL-3133 AT Vlaardingen (NL)**

• **REINHOUD, Hank R.,**
**Unilever R & D Vlaardingen**
**NL-3133 AT Vlaardingen (NL)**
• **RIKSEN, Harm J.,**
**Unilever R & D Vlaardingen**
**NL-3133 AT Vlaardingen (NL)**
• **VERHAGEN, Johannes J.,**
**Unilever R & D Vlaardingen**
**NL-3133 AT Vlaardingen (NL)**

(74) Representative: **Elliott, Peter William**
**Unilever Patent Group**
**Colworth House**
**Sharnbrook**
**Bedford**
**MK44 1LQ (GB)**

(56) References cited:
**WO-A-01/30229      US-A- 2 825 666
US-B1- 6 557 382**

**Description**

**Field of the invention**

The present invention relates to the field of fabric cleaning methods. The invention is particularly concerned with a water treatment method for obtaining water that is suitable for use with low environmental impact detergent products.

**Background of the invention**

In recent years we have become increasingly aware of the impact of human activities on the environment and the negative consequences this may have. Ways to reduce, reuse and recycle resources are becoming more important. Fabric cleaning is one of the many household activities with a significant environmental impact. This is partly caused by the use of conventional detergent products, which tend to be relatively complex compositions with a variety of ingredients. Over the years some ingredients have been banned by legislation in certain countries because of their adverse environmental effects. Examples include certain nonionic surfactants and builders such as phosphates. The use of phosphates in detergents has been linked to increased levels of phosphates in surface waters. The resulting eutrophication is thought to cause an increased growth of algae. The increased algae growth in stagnant surface water leads to oxygen depletion in lower water layers, which in turn causes general reduction of overall water quality.

Although some ingredients in conventional laundry detergent products may have a limited environmental effect, the energy involved in the production thereof influences the environmental impact during its life cycle negatively. Life cycle analysis typically estimates the environmental impact of a product during the different phases such as production of raw material, production of the product itself, distribution to the end user, use of the product by for example the consumer and the disposal after use. Environmental impact may include factors like eutrophication, green house effect, acidification and photo-chemical oxidant formation. With respect to laundry detergent products, extra ingredients necessarily add cost, volume and weight to the product, which in turn requires more packaging material and transport costs. Extra ingredients usually require a more complex production process. However, reducing the number and/or amount of the ingredients is difficult without reducing the cleaning efficiency.

One of the most bulky ingredients of common laundry detergents are so-called builders like for example zeolites, phosphates and carbonates. Nowadays, builders are added to laundry detergent formulations for their ability to sequester hardness-ions like $Ca^{2+}$ and $Mg^{2+}$. The reduction of hardness ions is required in order to prevent the deposition of calcium soaps in the soil, to prevent the precipitation of anionic surfactants, to maximise colloid stability and to reduce the calcium - soil - substrate interaction and soil - soil interaction and hence to improve soil removal. Apart from their positive effects, common builders also may have negative effects on laundry cleaning processes. For example, builders often generate insoluble materials in the wash either as such or by formation, of precipitates. For example, zeolites are insoluble and may cause incrustation of fabrics and heater elements of washing machines and precipitates of calcium-builder may result in higher redeposition.

From the above it will be clear that on the one hand the removal of hardness ions is required to ensure a good cleaning performance, while on the other hand the presence of builders in laundry detergents contributes significantly to their environmental impact. Furthermore, builders may also have negative effects on the performance of a laundry cleaning process.

An attractive solution for the above problems may be the removal of hardness ions from washing water before it comes into contact with the fabrics and the detergent solution. Ion exchange would be a possible technique to remove hardness ions from tap water, which would allow the removal of builders from the detergent, thus reducing its environmental impact. In a recent patent by Hitachi (US-A-6557382), water softening based on ion exchange was described. Ion exchange removes hardness ions ($Ca^{2+}$ and $Mg^{2+}$) from water by exchanging them with so-called replacement ions, typically $Na^+$ or $H^+$, which are stored on the ion-exchange resins. The resin is exhausted when most replacement ions have been replaced by hardness ions. However, in order to replenish the resin, also called regeneration of the resin, a strong solution of the replenishment ions is generally applied to the resin. This exchanges the ions that have been removed from the water and regenerates the resin. For this purpose, usually a concentrated salt solution or strong acid or base solution is used, which is undesirable for application in in-home laundry for reasons of negative environmental impact, high cost and lack of convenience and user friendliness. It would therefore be desirable to regenerate the ion exchange resins by means of a non-polluting method that is especially suited for the application of in-home laundry cleaning processes.

WO-A-01/30229 discloses a washing machine having a water supply system and a water softening system, which can be regenerated without substances or additives, preferably by ED1 (electodeionisation). The softening system comprises anionic and cationic resins.

US-A-2825666 discloses a water demineralising unit in a dishwashing apparatus. The unit uses electricity in combination with two ion exchange resins.

Other bulky ingredients of common main-wash laundry detergents, are so-called buffers like for example carbonate, di-silicate or meta-silicate. These buffer components are added to detergent formulations to reach and maintain the desired pH of the wash solution. The pH of a wash solution is usually kept above 10 to improve fatty and particulate soil removal. Hence, on one hand the establishment of a high pH is required to ensure a good cleaning performance while on the other hand the presence of buffers in laundry detergents contributes to its environmental impact as was pointed out above.

Consequently, one of the objects of the present invention is to find a cost-effective method having low environmental impact for removing hardness ions from tap water and for modifying the pH. Another object of the present invention is to find a method for removing hardness ions from tap water and for modifying the pH of said water in a manner that is convenient and user friendly to consumers. Yet another object of the invention is to find a suitable method for treating tap water such that water is obtained that is suitable for use with a low environmental impact detergent product (LEIP, as defined herein), in fabric cleaning methods. A still further object of the invention is to find a cleaning method wherein water obtained from such a water treatment method can be suitably used with a LEIP in in-home cleaning appliances, such as a fabric washing machine.

A known method for water treatment is the so-called electrodeionisation (EDI) method, as known from WO-A-01/30228 which combines ion exchange and electrodialysis. The resulting hybrid process does not require regenerating chemicals. An EDI module may for example consist of a repeating combination of a diluting chamber that contains anion and/or cation exchange resins confined within cation - and anion exchange membranes, a concentrating chamber and finally electrolyte chambers. Water may flow through the various chambers in separate loops. Cations, like $Ca^{2+}$ and $Mg^{2+}$ are attracted to the cathode, and anions are attracted to the anode, with the resin acting as a conducting medium. The ions are transferred to the concentrating chamber by applying DC current resulting in a voltage of typically in a range between 10 and 300 V. This way softened water is obtained. The current has the effect of splitting water molecules into $H^+$ ions and $OH^-$ ions. The $H^+$ ions and $OH^-$ ions keep the resin in a regenerated state. During the ion exchange process ions in the water, e.g. tap water, are replaced by replacement ions from the ion exchange resin. When ion exchange resins are used that are mainly in the $H^+$ or $OH^-$ form, ion exchange can also be used to modify the pH of the tap water stream by an appropriate selection and order of the ion exchange resins.

One or more of said confining membranes may be in the form of so-called bipolar membranes which consist of a cation and anion exchange membrane layer pressed together into a single sheet. The desired function of this type of membranes is a reaction in the bipolar junction of the membrane. Here water is split into $H^+$ ions and $OH^-$ ions by a so-called 'disproportionation' reaction. Water splitting in a bipolar membrane can be explained by looking closely to the interface between the anion and cation exchange membrane. Here the negative groups of the cation exchange polymer come close enough to the positive groups of the anion exchange polymer to form a salt. The counter ions, e.g. $OH^-$ and $H^+$, move away under the influence of the applied electrical field, instead of recombining to water. Being in equilibrium, the salt will react with water and return the resins to their initial state.

## Definition of the invention

Surprisingly we have now found a cleaning method for low environmental impact detergent products, that enables one or more of the above-mentioned objects to be achieved. Accordingly, the present invention provides the cleaning method of claim 1,

For the purpose of the present invention, the feed water is defined to be water having a conductivity of more than 50 micro Siemens cm$^{-1}$, preferably more than 100 micro Siemens cm$^{-1}$ and more preferably more than 200 micro Siemens cm$^{-1}$. For practical reasons, the feed water is desirably tap water from the main, having a water hardness of at least 7°FH.

Preferably, step (iii) of the cleaning method of the invention is carried out in a fabric- or dishwashing machine. In view of this, the wash amplified water has a pH of above 8.5, preferably above 9.5.

The cleaning method of the invention is particularly suitable for in-home use and the WAW obtained from said method is suitable for use in a household-cleaning appliance.

These and other aspects, features and advantages will become apparent to those of ordinary skill in the art from a reading of the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Other than in the experimental examples, or where otherwise indicated, all numbers expressing quantities of ingredients or reaction conditions used herein are to be understood as modified in all instances by the term "about". Similarly, all percentages are weight/weight percentages of the low environmental detergent product composition unless otherwise indicated. Numerical ranges expressed in the format "from x to y" are understood to include x and y. When for a specific feature multiple preferred ranges are described in the format "from x to y", it is understood that all ranges combining the different endpoints are also contemplated. Where the term "comprising" is used in the specification or claims, it is not intended to exclude any terms, steps or features not specifically recited. All measurements are in SI units unless otherwise specified. For example, all temperatures are in degrees Celsius (°C) unless otherwise specified. Water hardness is expressed in degrees French Hardness (°FH).

## Detailed description of the invention

The Wash Amplified Water (WAW) that is obtained as a result of step (i) of the method of the invention is particularly suitable for use in a household-cleaning appliance. The household appliance may be any device related to cleaning like for example a washing machine, in particular a fabric - or dish washing machine. As is known, certain household appliances, in particular dish-washers, are provided with a system, also known as a water decalcifier or softener, for reducing the water hardness. In particular, such a system is provided for reducing the calcium and magnesium contents of the water used for washing purposes, which may inhibit the action of detergents and produce calcareous deposit; in fact, calcareous deposits are due to an excessive amount of calcium ions ($Ca^{2+}$) and magnesium ions ($Mg^{2+}$) contained in the water supplied by the main. Ion exchangers for removing hardness ions ($Ca^{2+}$ and $Mg^{2+}$) from water that are applied in some current dishwashing machines, typically use $Na^+$ as so-called replacement ions. Water flows over the resin and the hardness ions in the water are exchanged with the replacement ions on the resin. The resin is exhausted when most replacement ions have been replaced by hardness ions. In order to replenish the resin, also called regenerating the resin, a strong solution of the replenishment ions is generally applied to the resin. In view of the discussion above such a regeneration method is undesirable.

Accordingly, the present invention has amongst others the aim to provide a washing water treatment method in which the feed water is successively contacted with an appropriate combination of cation exchange resins and anion exchange resins in order to produce Wash Amplified Water (WAW) having a pH that is more than 0.5 pH unit different from the feed water and a water hardness of less than 5°FH, and in which the resins are regenerated with the use of an electric field. Regeneration of the resins is preferably carried out using electrodeionisation (EDI).

In order to be effective for washing processes, the WAW has to fulfil a number of requirements. First of all, the water hardness is less than 5°FH, preferably less than 2°FH and more preferably less than 1°FH. The reduction of the water hardness is required in order to prevent the deposition of calcium soaps in the soil, to prevent the precipitation of anionic surfactants, to maximise colloid stability and to reduce the calcium - soil - substrate interaction and soil - soil interaction and hence to improve soil removal. Finally, the pH of the WAW is an important parameter. As explained earlier, the pH of a conventional wash solution is usually kept above 10 to improve fatty and particulate soil removal. Hence, the pH of the WAW for the average wash is higher than 8.5, preferably higher than 9.5.

The WAW has a pH value that is more than 0.5 pH unit, preferably more than 1.0 pH unit, more preferably more than 1.5 pH units different from the feed water.

The properties of the WAW can be tuned by using the appropriate combinations of ion exchange resins. Ion exchange resins may be a salt, acid or base in a solid form that is insoluble in water but hydrated. Exchange reactions take place in the water, retained by the ion exchanger. An ion exchange resin consists of a polymer matrix and functional groups that interact with the ions. Examples of well known polymer matrices are polystyrene resins, phenol - formaldehyde resins, polyalkylamine resins and poly(acrilic acid) resins.

In general four main categories of ion exchange resins can be distinguished based on the acidic - or basic strength of the functional groups on the surface of the respective resins, i.e. strongly acidic - , weakly acidic - weakly basic - and strongly basic ion exchange resins. For this particular application cation exchange resins in the $H^+$ form and anion exchange resins in the $OH^-$ form are particularly preferred although also other types may be used. The acidic - or the basic strength of the ion exchange resins is respectively expressed by the pKa value for acidic resins and the pKb value for basic resins. The accompanying acid - and base dissociation reactions can be written as:

$$(1)\ HA \Leftrightarrow A^- + H^+ \text{ (acidic dissociation)}$$
$$(2)\ BOH \Leftrightarrow B^+ + OH^- \text{ (basic dissociation)}$$

For the present invention, the pKa value of the acidic cation exchange resins is defined as the pH of the water contacting the acidic resin whereby the number of functional groups in the HA form is 10 times more than the number of functional groups in the $A^-$ form. The pKb value of the basic anion exchange resins is defined as the pOH of the water contacting the basic resin whereby the number of functional groups in the BOH form is 10 times more than the number of functional groups in the $B^+$ form.

Strongly acidic cation exchange resins have a pKa < 3 and for example have sulfonic acid functional groups. Examples of strongly acidic cation exchange resins are but limited to Amberjet 1200 H, 1200 Na, 1500 H, Amberlite IR100 Na, IR120 H, IR120 Na, IR122 Na, SR1L, Amberlite 200C Na, 252 H, 252 Na, 252RF H, 252 H, Imac C16NS (all Rohm & Haas), Lewatit Monoplus S100, S110 H, S100LF, SP112, Monoplus SP112 (all Bayer), Dowex Monosphere C600 H, C600, Marathon C H, HGRW, HCRS(E0, HCRS H, HCRS, HGR, MSC H, MSC Na 88, Marathon MSC (all Dow), Diaion SK1B, SK110, PK220 (Mitsubishi), PFC100 H, PCF100, C120E, C100MB H, C100, C100x10, C100E, PF100E, C150 H, C150, C150FL, C150TL (all Purolite), Impact CS398UPS, CS399UPS, C249, C399, CFP110 (all Sybron).

Weakly acidic cation exchange resins have a $3 < pKa < 9$ and for example have carboxylic acid functional groups. Examples of weakly acidic cation exchange resins are for example but not limited to Amberlite IRC 86, IRC50, IRC76, IRC86RF, IRC86SB, Imac HP333, Imac HP336 (all Rohm & Haas) and Lewatit CNP80, CNP80WS, CNPLF (all Bayer), Dowex MAC3, CCR2, Upcore, MAC3LB (all Dow), Diaion WK10, WK20, WK40 (all Mitsubushi) and SR10 and CCP (Sybron).

Weakly basic anion exchange resins have a $5 < pKb < 9$ and have for example quaternary or tertiary amine functional groups. Examples of weakly basic anion exchange resin are but limited to Amberlite IRA67, IRA67RF, IRA95, IRA96, IRA96RF, IRA96SB (all Rohm & Haas), Lewatit POC1072, MP64 (all Bayer), Dowex MWA1, Monosphere WB500, MWA1LB (all Dow), Diaion WA10, WA20, WA30 (all Mitsubushi), A103S, A845, A847, A845FL, A100, A100FL, A100DL (all Purolite), A328, A329 (Sybron).

Strongly basic anion exchange resins have a $pKb < 6$ and have for example quaternary amine, quaternary ammonium, quaternary phosphonium and tertiary sulfonium functional groups. Example of strongly basic anion exchange resins are but limited to Amberjet 4200 Cl, 4400 OH, 4400 Cl, 4600 Cl, Amberlite IRA402 Cl, IRA402 OH, IRA404 Cl, IRA410 Cl, IRA458 Cl, IRA458 RF Cl, IRA900 Cl, IRA900RF Cl, IRA910 Cl, IRA958 Cl, Ambersep 900 SO4 Imac HP555 (all Rohm & Haas), Lewatit Monoplus M550, Monoplus M600, M500, M511, M610, VPOC1071, VPOC1073, MP500, Monoplus MP500, MP600, VPOC1074, SN36 (all Bayer), Dowex Marathon A Monosphere A625, Marathon ALB, Marathon A2, Marathon A2 500, SBRP, SAR, MSA1, Marathon MSA, MSA2 (all Dow), Diaion SA10A, SA11A, SA20A, PA308, PA312, PA412, PA416 (all Mutsubishi), PFA400, PFA300, A400, A400MB OH, A420S, A444, A200, A300, A850, A850FL, A870, A500, A500PS, A500FL, A510, A860, A500TL, A520E (all Purolite), Impact AG1P UPS, AG1 UPS, AG2 UPS, ASB1P, ASB2, A641, A651, A642, SR7 (all Sybron).

Another type of ion exchange resin is the so-called mixed resin for example but not limited to Amberlite MB6113, MB20, MB9L, Lewatit SM92, Dowex MB50, MB500, IND, MB400, MB46 and NM65. Other types of electroactive media include, but are not limited to, zeolite resin material, synthetic activated carbons, hypercrosslinked sorbent resins such as PUROLITE®HYPERSOL-MACRONET® sorbent resins (trademarks of Purolite Company, Bala Cynwyd, Pa.), synthetic carbonaceous adsorbents, such as AMBERSORB® carbonaceous adsorbents (trademark of Rohm & Haas Corporation) and G-BAC® adsorbents (trademark of Kureha Chemical Industry Co., Ltd., Japan), polymeric adsorbent resin beads that are prepared by alkyline bridging haloalkylated, porogen-modified, cross-linked copolymer beads, having microporosities in the range of about 0.2 and 0.5 cm3/cm, mesoporosities of at least about 0.5 cm3/g, and total porosity of at least about 1.5 cm3/g as disclosed, for example, by Stringfield, in U.S. Pat. No. 5,460,725, and catalytic carbon as disclosed, for example, by Hayden, in U.S. Pat. No. 5,444,031, and Matviya et al., in U.S. Pat. No. 5,356,849. One of the potential problems that may occur while softening the feed water and adjusting its pH using electrodeionization is the risk of the formation of insoluble Ca-deposits. These deposits are formed at conditions of high $Ca^{2+}$ concentration and at high pH. Hence the pH in the ion exchange beds should be kept lower than 11 to prevent precipitation of $Ca(OH)_2$ and preferably lower than 9 to prevent precipitation of $CaCO_3$. Especially when a weakly acidic cation exchange resin is used for water softening, the pH of the water during the softening steps should preferably be lower than 7 to maximise the selectivity for removal of $Ca^{2+}$ over $Na^+$ which is desired for this application. However, in case of using a weakly acidic cation exchange resin the pH of the water during the softening process should not become lower than 5 in order to maintain a driving force for $Ca^{2+}$ exchange with the exchanging ions on the resins which preferably are $H^+$ ions. When in the descriptions $Ca^{2+}$ is mentioned it should be clear also the other hardness ion, $Mg^{2+}$, is meant.

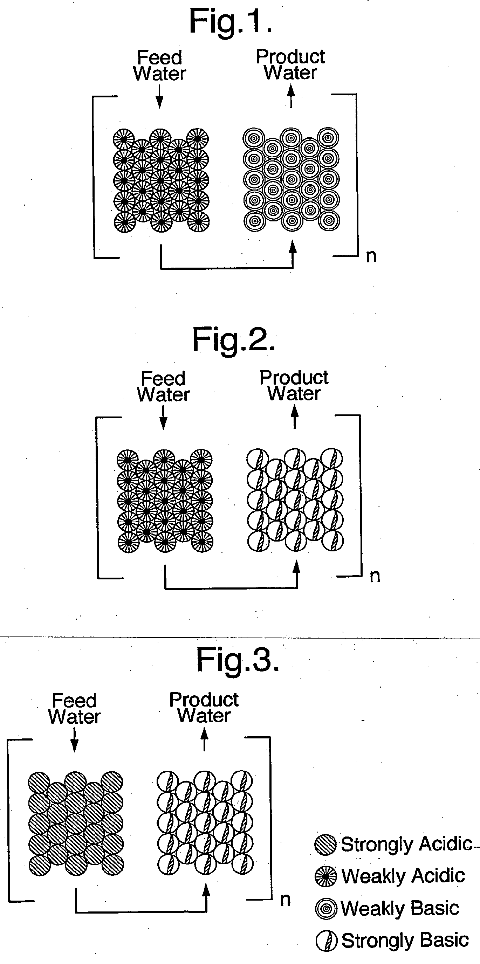

The present invention is illustrated by the following non-limiting embodiments as schematically shown in Figures 1 - 21. It is noted that these figures provide a schematic representation and are not intended to show the preferred amount and ratio of the various types of resins.

The ratio between the different ion exchange resin materials as indicated below is defined as the weight ratio between the weight of cation resin material and the weight of the anion resin material applied in the method of the invention.

In Figure 1, an embodiment of the present invention is illustrated. The feed water is contacted with one or more (n = 1, 2, 3...n) sets consisting of first a weakly acidic cation exchange resin and second a weakly basic anion exchange resin which are mainly in the $H^+$ and $OH^-$ form respectively and which are located within an EDI module. The advantage of using a weakly acidic cation exchange resin for water softening in this application as compared to a strongly acidic cation exchange resin is its high selectivity for $Ca^{2+}$ over $Na^+$ hence utilising its capacity more effectively for softening. The weakly basic anion exchange resin will exchange anions for $OH^-$ and hence the pH of the softened water exiting the EDI module has a pH of about 9. Clearly, the pH will depend on the pKb of the selected basic resin. In cases where n = 2 or higher, the water can even be softened more effectively using a weakly acidic cation exchange resin. As $Ca^{2+}$ is being removed from the water it is exchanged for $H^+$ and hence the water will become more acidic. However, if the pH of the water being softened approaches the pKa of the weakly acidic cation exchange resin the net exchange of $Ca^{2+}$ will be strongly reduced, limiting the effectiveness of the weakly acidic cation exchange resin to soften water. In case of a weakly acidic resin, the pKa will be in the order of 4 and hence the pH of the water preferably has to stay above about 5 to ensure an effective softening process. After it has been contacted with the weakly acidic cation exchange resin, the softened water is subsequently contacted with the weakly basic anion exchange resin which boosts the pH of the water. The advantage of applying a weakly basic anion exchange resin is that the pH will never exceed the pKb of the resin which in case of weakly basic anion exchange resins may be about 9. This means that the risk of forming Ca-deposits as mentioned earlier is reduced. In cases where n = 2 or higher, the alkaline water is thereafter contacted with the weakly acidic cation exchange resin of the second set. Since the pH of said water is about 9, the weakly acidic resin is again capable to exchange $Ca^{2+}$ for $2H^+$ and hence a more effective water softening can be accomplished. The ratio between the weakly acidic cation exchange resin and the weakly basic anion exchange resin is preferably higher than 1, more preferably higher than 1.5 and most preferred higher than 2.

Another embodiment is depicted in Figure 2. In this case the feed water is first contacted with one or more (n = 1, 2, 3...n) sets consisting of first a weakly acidic cation exchange resin and second a strongly basic anion exchange resin which are mainly in the $H^+$ and $OH^-$ form respectively. The ratio between the weakly acidic cation exchange resin and the strongly basic anion exchange resin is preferably higher than 1, more preferably higher than 2 and most preferred higher than 4 (said ratio may vary for sets n>=2).

Another embodiment is depicted in Figure 3. In this case the feed water is first contacted with one or more (n = 1, 2, 3...n) sets consisting of first a strongly acidic cation exchange resin and second a strongly basic anion exchange resin which are mainly in the $H^+$ and $OH^-$ form respectively. The ratio between the weakly acidic cation exchange resin and the strongly basic anion exchange resin is preferably higher than 0.5, more preferably higher than 1 and most preferred higher than 2 (said ratio may vary for sets n>=2).

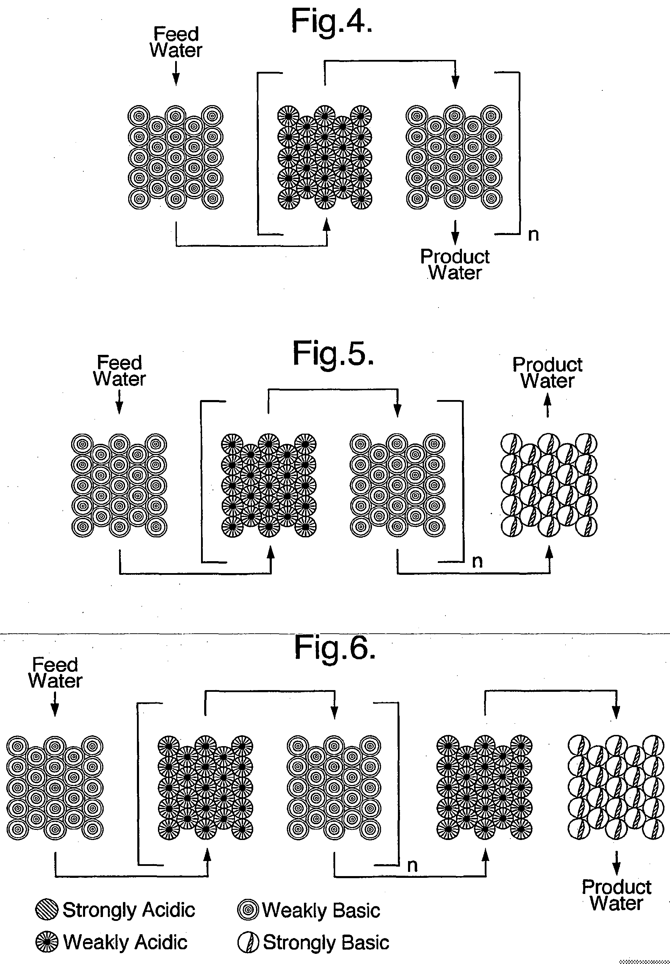

Another embodiment is depicted in Figure 4. In this case, the feed water is firstly contacted with a weakly basic anion exchange resin and subsequently with one or more (n = 1, 2, 3...n) sets consisting of, firstly, a weakly acidic cation exchange resin and, secondly, a weakly basic anion exchanges resin. The weakly acidic cation exchange resin and the weakly anion exchange resin are mainly in the $H^+$ and $OH^-$ form respectively. The advantage of this embodiment is that the pH of the feed water is already increased before the water is contacted with weakly acidic cation exchange resin material of the first set. This way, the level of softening that can be realised during the first contact with the weakly acidic cation exchange is higher than would be obtainable in case the water enters at pH 8 which is common for tap water.

Yet another embodiment is illustrated in Figure 5. In this case, the feed water is first contacted with a weakly basic anion exchange resin and subsequently with one or more (n = 1, 2, 3...n) sets consisting of a weakly acidic cation exchange resin and a weakly basic anion exchange resin. Also in this embodiment, these exchange resins are mainly in the $H^+$ and $OH^-$ form respectively. After leaving the final set of weakly acidic and weakly basic ion exchange resins, the softened water is contacted with a strongly basic anion exchange resin in order to boost the pH of the water to for example 11. The final pH clearly will depend on the pKb of the selected strongly basic anion exchange resin. The advantage of operating in this way is that Ca-deposits are prevented and still washing water with a very suitable pH for washing can be produced.

In another embodiment (see Figure 6), it is shown that it is not necessary to contact the water with a strongly basic anion exchange resin in the final stage of the process as is implied in Figure 5. In this case the softened water from the final weakly acidic cation exchange resin is directly contacted with the strongly basic anion exchange resin.

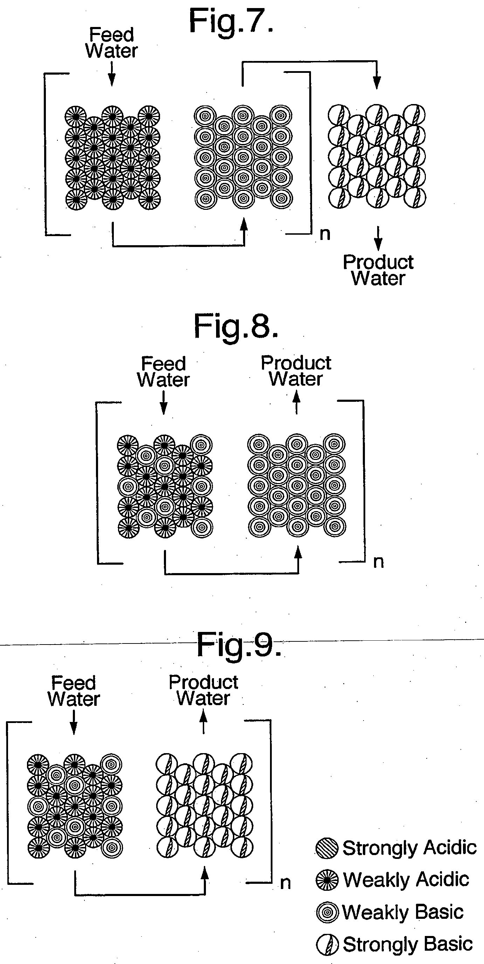

In another preferred embodiment (shown in Figure 7), the feed water is contacted with one or more (n = 1, 2, 3...n) sets consisting of a weakly acidic cation exchange resin and a weakly basic anion exchange resin which are mainly in the $H^+$ and $OH^-$ form respectively. After leaving the final set of the weakly acidic and the weakly basic ion exchange resin, the softened water is contacted with a strongly basic anion exchange resin in order to boost the pH of the water to for example 11. The final pH clearly will depend on the pKb of the selected strongly basic resin.

Another preferred embodiment is depicted in Figure 8, in which the feed water is contacted with a mixed bed consisting of a weakly acidic cation exchange resin and a weakly basic anion exchange resin which are mainly in the $H^+$ and $OH^-$ form respectively. After leaving this mixed bed the softened water is contacted with a weakly basic anion exchange resin in order to raise the pH of the water to for example 9. By using a mixed bed of a weakly acidic cation exchange resin and a weakly basic anion exchange resin, the pH of the softened water can be kept within the desired pH range of about 5 and about 9. Hence an optimal $Ca^{2+}$ removal is combined with a reduced risk for Ca-deposits formation. The ratio between the weakly acidic cation exchange resin and the weakly basic anion exchange resin is preferably higher than 1, more preferably higher than 1.5 and most preferred higher than 2.

Alternatively, after leaving this mixed bed the softened water may be contacted with a strongly basic anion exchange resin in order to raise the pH of the water to a value of for example 11 (see Figure 9).

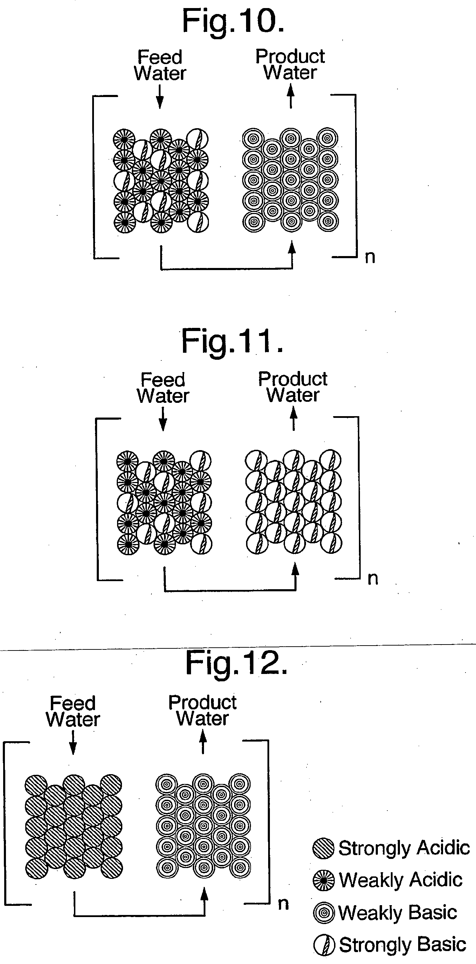

Another embodiment is depicted in Figure 10 in which the feed water is contacted with a mixed bed consisting of a weakly acidic cation exchange resin and a strongly basic anion exchange resin which are mainly in the $H^+$ and $OH^-$ form respectively. After leaving this mixed bed the softened water is contacted with a weakly basic cation exchange resin in order to raise the pH of the water to for example 9. By using a mixed bed of a weakly acidic cation exchange resin and a strongly basic anion exchange resin in the appropriate ratio, the pH of the water being softened can be kept within the desired pH range of about 5 and about 9 and hence an optimal $Ca^{2+}$ removal is combined with a reduced risk for Ca-deposits formation. The ratio between the weakly acidic cation exchange resin and the strongly basic anion exchange resin is preferably higher than 1, more preferably higher than 2 and most preferred higher than 4.

Alternatively, after leaving this mixed bed the softened water may be contacted with a strongly basic anion exchange resin in order to raise the pH of the water to a value of for example 11 (see figure 11). The ratio between the weakly acidic cation exchange resin and the strongly basic anion exchange resin is preferably higher than 1, more preferably higher than 2 and most preferred higher than 4.

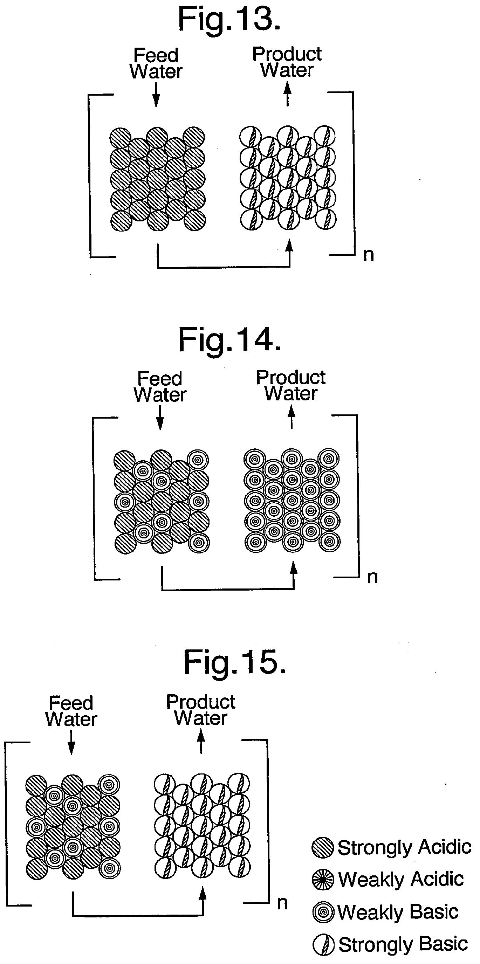

In another embodiment (as shown in Figures 12 and 13), the feed water is first contacted with a strongly acidic cation exchange resin and next with a weakly basic anion exchange resin in order to raise the pH of the softened water to for example 9 or with a strongly basic anion exchange resin. The ratio between the strongly acidic cation exchange resin and the weakly basic anion exchange resin is preferably higher than 1, more preferably higher than 0.5 and most preferred higher than 2.

In another embodiment (see Figure 14) the feed water is first contacted with a mixed bed consisting of strongly acidic cation exchange and weakly basic anion exchange resin which are mainly in the $H^+$ and $OH^-$ form respectively. After leaving this mixed bed the softened water is contacted with a weakly basic anion exchange resin in order to raise the pH of the water to for example 9. Alternatively, after leaving the mixed bed the softened water may be contacted with a strongly basic anion exchange resin in order to boost the pH of the washing water to for example 11 (see Figure 15). The ratio between the strongly acidic cation exchange resin and the weakly basic anion exchange resin in the mixed bed is preferably higher than 1, more preferably higher than 1.5 and most preferred higher than 2.

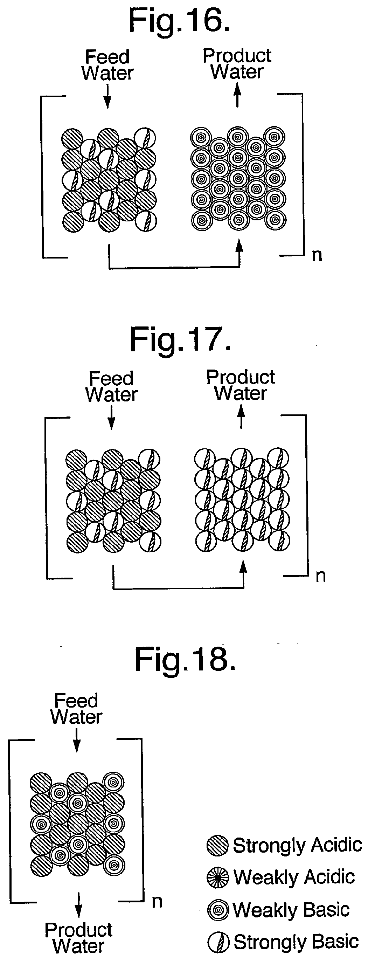

In another embodiment (as shown in figure 16) the feed water is first contacted with a mixed bed consisting of strongly acidic cation exchange and strongly basic anion exchange resin which are mainly in the $H^+$ and $OH^-$ form respectively. After leaving this mixed bed the softened water is contacted with a weakly basic anion exchange resin in order to raise the pH of the water to for example 9. The ratio between the strongly acidic cation exchange resin and the strongly basic anion exchange resin in the mixed bed is preferably higher than 1, more preferably higher than 1.5 and most preferred higher than 2. Alternatively (see figure 17), after leaving the mixed bed the softened water may be contacted with a strongly basic anion exchange resin in order to boost the pH of the washing water to for example 11.

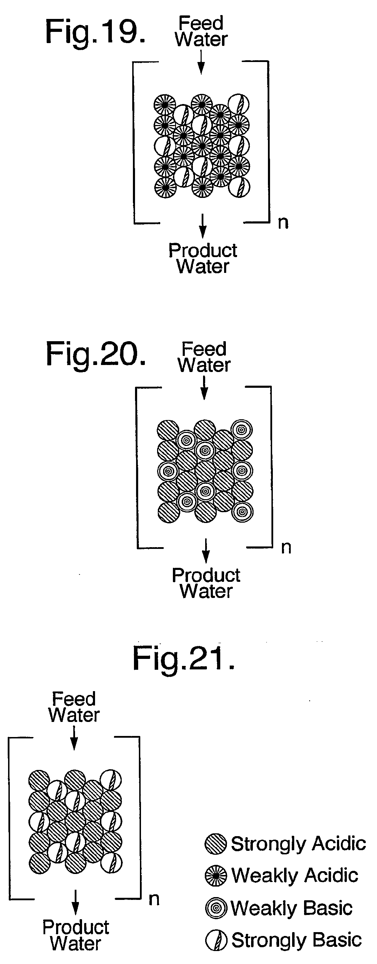

In a preferred embodiment (see Figure 19), the feed water is contacted with a mixed bed consisting of weakly acidic cation exchange and strongly basic anion exchange resin which are mainly in the $H^+$ and $OH^-$ form respectively. The resulting washing water has a reduced hardness and the pH may vary between 5 and even 9 depending on the respective pKa and pKb of the weakly acidic and strongly basic ion exchange resin and the ratio between them. The ratio between the weakly acidic cation exchange resin and the strongly basic anion exchange resin in the mixed bed is preferably higher than 1, more preferably higher than 2 and most preferred higher than 4.

In yet another embodiment (see Figure 20), the feed water is contacted with a mixed bed consisting of strongly acidic cation exchange and weakly basic anion exchange resin which are mainly in the $H^+$ and $OH^-$ form respectively. The resulting washing water has a reduced hardness and the pH may vary between 3 and even 9 depending on the respective pKa and pKb of the strongly acidic and weakly basic ion exchange resin and the ratio between them. The ratio between the weakly acidic cation exchange resin and the weakly basic anion exchange resin in the mixed bed is preferably higher than 0.5, more preferably higher than 1 and most preferred higher than 2.

In another embodiment (see Figure 21), the feed water is contacted with a mixed bed consisting of strongly acidic cation exchange and strongly basic anion exchange resin which are mainly in the $H^+$ and $OH^-$ form respectively. The resulting washing water has a reduced hardness and the pH may vary between 3 and even 9 depending on the respective pKa and pKb of the strongly acidic and weakly basic ion exchange resin and the ratio between them. The ratio between the weakly acidic cation exchange resin and the weakly basic anion exchange resin in the mixed bed is preferably higher than 0.5, more preferably higher than 1 and most preferred higher than 2.

The contact time of the water being treated and the ion exchange resins is an important parameter. The contact time for the present invention is defined as the ratio between the total volume of the combined ion exchange resins contacting the water being treated and the flow rate of said water.

```
Contact time [s] = total resin volume contacting the water [L]
/ water flow rate [L min⁻¹].
```

For reasons of minimizing the costs and the size of the equipment, the total volume of the ion exchange resins is kept as low as possible. However, a sufficient contact time of the water with the ion exchange resins is required to allow the ion exchange reaction to partially but not completely take place. Hence the total resin volume depends on the hardness of the feed water and will be at least 0.1 L for very low water hardness and at most 4 L for very high water hardness. The total resin volume contacting the water being treated is preferably smaller than 4 L, more preferably smaller than 3 L and most preferably smaller than 2 L but larger than 0.1 L.

Another consideration is the fill flow rate of the treated water into the appliance, which preferably is larger than 0.25 L min$^{-1}$ for reasons of convenience for the user. The maximum flow rate is limited by the maximum fill rate from a regular tap connection, which is in the order of 15 L min$^{-1}$. The preferred fill rate is higher than 0.25 L min$^{-1}$, more preferably higher than 1.0 L min$^{-1}$ and most preferably higher than 2 L min$^{-1}$ but lower than 15 L min$^{-1}$.
Based on these considerations the contact time as defined above should preferably be larger than 0.01 min, more preferably larger than 0.1 min and most preferably larger than 0.3 min but lower than 2 min.

Another important process parameter for the present invention is the maximum allowable pressure drop over the water treatment device. The pressure drop will especially be determined by the size of the resin particles that are present, i.e. the smaller the particle size, the larger the pressure drop. On the other hand, the smaller the particle size, the larger the contact area of the resin with the water will be per unit volume. The diameter of the resin particles is defined as the ratio between the volume and the external surface area of the resin particle. Based on these considerations the average particle size of the ion exchange resins is preferably larger than 0.05 mm, more preferably larger than 0.1 mm and most preferably larger than 0.5 mm but smaller than 10 mm.

In this respect also the porosity in the ion exchanging compartments is an important criterion. The porosity in this case is defined as:

```
Porosity [-] = volume of the ion exchange material [L] / volume
of the compartment containing the ion exchange resins [L].
```

For reasons of limiting the pressure drop while minimizing the volume of the ion exchange resin container the porosity is preferably smaller than 0.8, most preferably smaller than 0.6 and preferably higher than 0.2.

**The cleaning method**

In the cleaning method of the invention, the wash amplified water obtained as a result of the water treatment step (i) is mixed in step (ii) with a low environmental impact detergent product (LEIP) and used for treating substrates to be cleaned. Said cleaning method is preferably carried out in a fabric washing or a dish washing machine.

Builders

It is estimated that the majority of laundry detergent products sold in most parts of the world are conventional granular detergent products. These typically comprise more than 15 %wt of a builder. Builders are added to improve the detergency but builders such as phosphate are renowned for their effect on eutrophication. To overcome this problem in many countries - in particular those where phosphates are banned, zeolites have become the accepted industry standard. The LEIP used according to the invention is substantially builder-free. Substantially builder-free for the purpose of the present invention means that the LEIP comprises 0 to 5 %wt of builder by weight of the total LEIP composition. Preferably, the LEIP comprises 0 to 3 %wt, more preferably 0 to 1 %wt, most preferably 0 wt of builder by weight of the total LEIP composition.

Builder materials are for example 1) calcium sequestrant materials, 2) calcium precipitating materials, 3) calcium ion-exchange materials and 4) mixtures thereof.

Examples of calcium sequestrant builder materials include alkali metal polyphosphates, such as sodium tripolyphosphate; nitrilotriacetic acid and its water- soluble salts; the alkali metal salts of carboxymethyloxy succinic acid, ethylene diamine tetraacetic acid, oxydisuccinic acid, mellitic acid, benzene polycarboxylic acids, citric acid; and polyacetal carboxylates as disclosed in US Patents 4,144,226 and 4,146,495 and dipicolinic acid and its salts. Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also know as Zeolite P), zeolite Q, zeolite X, zeolite Y and also the zeolite P type as described in EP-A-0384070. In addition polymeric builders like poly-acrylates and poly-maleates. Although soaps may have a builder function for the purpose of the present invention soaps are not considered to be builders but surfactants.

Surfactants

The LEIP used in the cleaning method of the invention comprises at least 10 wt.%, preferably at least 25 wt.% more preferably at least 40 wt.% of a surfactant. For most cases, any surfactant known in the art may be used. The surfactant may comprise one or more anionic, cationic, nonionic, zwitterionic surfactant and mixtures thereof. Further examples are given in "Surface Active Agents and Detergents" (Vol. I and II by Schwartz, Perry and Berch). A variety of such surfactants are also generally disclosed in U.S. Pat. No. 3,929,678, issued Dec. 30, 1975 to Laughlin, et al. at Column 23, line 58 through Column 29, line 23.

pH modifier

Another major ingredient in conventional granular detergent products are pH modifiers. For the purpose of the present invention the term pH modifier is meant to describe ingredients that affect the pH either by increasing, decreasing or maintaining the pH at a certain level. Typical examples include, but are not limited to, salts like acetates, borates, carbonates, (di) silicates, acids like boric acid, phosphoric acid, sulphuric acid, organic acids like citric acid, bases like NaOH, KOH, organic bases like amines (mono- and triethanol amine).
In conventional detergent products builder and pH modifier may account up to 70 wt.% of the composition. It is to be noted that for the purpose of the present invention surfactants - even though some surfactants may have some pH effect are not considered to be a pH modifier.
The LEIP according to one preferred embodiment of the invention is substantially free of pH modifier. Substantially free of pH modifier is meant to describe products comprising 0 to 5 wt.% of pH modifier. Preferably the LEIP comprises 0 to 3 wt.%, more preferably 0 to 1 wt.%, most preferably 0 wt.% of pH modifier by weight of the total LEIP composition.

Enzymes

Enzymes constitute a preferred component of the LEIP. The selection of enzymes is left to the formulator. However, the examples herein below illustrate the use of enzymes in the LEIP compositions according to the present invention. "Detersive enzyme", as used herein, means any enzyme having a cleaning, stain removing or otherwise beneficial effect in a LEIP. Preferred enzymes for the present invention include, but are not limited to, inter alia proteases, cellulases, lipases, amylases and peroxidases.

Enzyme Stabilizing System

The LEIP herein may comprise from about 0.001% to about 10% by weight of the LEIP of an enzyme stabilizing system. One embodiment comprises from about 0.005% to about 4% by weight of the LEIP of said system, while another aspect includes the range from about 0.01% to about 3% by weight of the LEIP of an enzyme stabilizing system. The enzyme stabilizing system can be any stabilizing system which is compatible with the detersive enzyme. Stabilizing systems can, for example, comprise calcium ion, boric acid, propylene glycol, short chain carboxylic acids, boronic acids, and mixtures thereof, and are designed to address different stabilization problems depending on the type and physical form of the detergent composition.

Bleaching System

The LEIP composition used in the method of the present invention may optionally include a bleaching system. Non-limiting examples of bleaching systems include hypohalite bleaches, peroxygen bleaching systems with or without an organic and/or transition metal catalyst, or transition metal nil peroxygen systems. Peroxygen systems typically comprise a "bleaching agent" (source of hydrogen peroxide) and an "activator" and/or "catalyst", however, pre-formed bleaching agents are included. Catalysts for peroxygen systems can include transition metal systems. In addition, certain transition metal complexes are capable of providing a bleaching system without the presence of a source of hydrogen peroxide.

Optional cleaning agents

The LEIP may contain one or more optional cleaning agents. Cleaning agents include any agent suitable for enhancing the cleaning, appearance, condition and/or garment care. Generally, the cleaning agent may be present in the compositions of the invention in an amount of about 0 to 20 wt.%, preferably 0.001 wt.% to 10 wt.%, more preferably 0.01 wt.% to 5 wt.% by weight of the total LEIP composition.
Some suitable cleaning agents include, but are not limited to antibacterial agents, colorants, perfumes, pro-perfumes, finishing aids, lime soap dispersants, composition malodour control agents, odour neutralisers, polymeric dye transfer inhibiting agents, crystal growth inhibitors, anti-tarnishing agents, anti-microbial agents, anti-oxidants, anti-redeposition agents, soil release polymers, thickeners, abrasives, corrosion inhibitors, suds stabilising polymers, process aids, fabric softening agents, optical brighteners, hydrotropes, suds or foam suppressors, suds or foam boosters, anti-static agents, dye fixatives, dye abrasion inhibitors, wrinkle reduction agents, wrinkle resistance agents, soil repellency agents, sunscreen agents, anti-fade agents, and mixtures thereof.

Product format

The LEIP may be dosed in any suitable format such as a liquid, gel, paste, tablet or sachet. In some cases granular formulations may be used although this is not preferred. In one preferred embodiment the LEIP is a non-aqueous product. Non-aqueous for the purpose of the present invention is meant to describe a product comprising less than 10 wt.%, preferably less than 5 wt.%, more preferably less than 3 wt.% of free water. The non-aqueous product may be a liquid, gel or paste or encapsulated in a sachet.

It has been suggested to equip washing machines with one or more detergent product container so that the detergent product may be dosed automatically as described in EP-A-0419036. The LEIP may be dosed from a single container. Alternatively, the ingredients making up the LEIP may be dosed from separate containers as described in EP-A-0419036. Thus in one preferred embodiment at least one ingredient from the LEIP is dosed automatically. One advantage of a LEIP may be that the reduced number and/or amount of ingredients enables a much smaller volume of detergent product. In practice this would mean that the consumer does not need to refill the containers as often or that the containers may be smaller.

The present invention will now be illustrated with reference to the following non-limiting examples, in which parts and percentages are by weight unless indicated otherwise.

## Examples 1, A and B

Wash amplified water (WAW) was produced as follows:

Feed water from the public net (having a French hardness of 16°FH, and a pH-value of 8.2,) was contacted with a suitable combination of ion exchange resins, as shown in Figure 2 where n=2. The applied cation exchange resin was Dowex MAC-3 (ex Dow) and the applied anion exchange resin was Amberjet 4400 OH (ex Rohm & Haas). These resin materials were applied in a ratio of 2.5 and a total bed volume thereof was 600 ml. The water flow over the resins was 2 L min$^{-1}$. By contacting the feed water with said combination of ion exchange resins Wash Amplified Water with a hardness of 1° FH and a pH of 10.8 was produced.

In example 1, the cleaning performance of LEIP using the thus-produced WAW was tested as follows:

About 15 L of WAW was fed into a normal fabric washing machine (Miele, type W765). The LEIP was pre-dissolved in 1 L of WAW such that an aqueous detergent formulation was obtained consisting of WAW, NaLAS (> 95% pure, ex. Degussa Huls) in a concentration of 1.0 g L$^{-1}$, Savinase 12TXT (ex. Novozymes) in a concentration of 0.05 g L$^{-1}$ and foam depressor DC8010 (ex. Dow) in a concentration of 12 mg L$^{-1}$. The resulting aqueous LEIP-containing formulation was added to the fabric washing machine.

The load of the washing machine consisted of 3 kg of clean white cotton and 4 swatches of each of the following soil monitors (ex. CFT bv., Vlaardingen, The Netherlands).

- M002 (Grass on cotton)
- WFK 10D (Sebum on cotton)
- CS-216 (diluted lipstick on cotton)
- EMPA 106 (carbon black/mineral oil on cotton)
- AS-9 (Pigment/oil/milk on cotton)

The load was washed with the LEIP-containing formulation at a temperature of 40°C using the normal 'whites wash program' of the Miele washing machine.

In example A, a wash experiment was carried out using 15 L of tap water (having 16° FH and a pH value of 8.2) in stead of WAW. the same wash load and wash program. In this experiment, a LEIP-containing formulation was used having the same composition as example 1, albeit that the WAW in said formulation has been replaced by said tap water.

Finally, in Example B a wash experiment was carried out using 16 L of tap water (having 16° FH and a pH value of 8.2), and a commercial detergent product. Furthermore, the same wash load and wash program were used as in examples 1 and A.

The composition of this commercial detergent product is as follows:

| Ingredient | % by weight |
|---|---|
| Surfactants | 15.0 |
| Zeolite builder | 25.0 |
| Buffers | 50.0 |
| Enzymes | 0.5 |
| Anti-foam | 2.0 |
| Polymers | 0.5 |
| Other minors (including perfume) | 2.5 |
| Water | 4.5 |

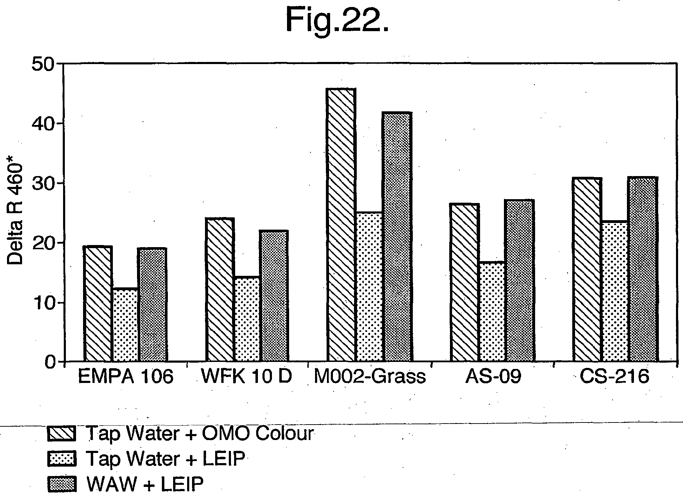

The corresponding cleaning results for the various soil monitors in the three wash experiments are shown in figure 22. The cleaning results are expressed as 'Delta R 460*', which is the difference in reflectance of the soil monitors after and before the washing experiment, as measured with a spectrophotometer (type 968, X-Rite) at 460 nm.

Figure 22 clearly shows that the cleaning performance of the LEIP-containing formulation with the regular tap water (comparative Example A) is significantly worse than the cleaning performance of the LEIP in combination with the WAW, for all soil monitors tested. Furthermore, the cleaning performance of the LEIP-containing formulation in combination with WAW appears to be comparable to that of a commercial detergent formulation with tap water (comparative example B).

## Claims

1.   A cleaning method comprising the steps of

(i) contacting feed water successively with one or more sets of first a cation exchange resin material and secondly an anion exchange resin material in order to produce wash amplified water (WAW) having a water hardness of less than 5° FH and a pH value that is more than 0.5 pH-unit different from that of the feed water said pH-value being higher than 8.5, whereby the resins are regenerated with the use of an electric field,
(ii) mixing said WAW with a low environmental impact detergent product (LEIP) containing 0 to 5 wt.% builder of the total LEIP composition and comprises at least 10% wt, preferably at least 25% wt, more preferably at least 40% wt, of surfactant, for obtaining a wash liquor; and
(iii) treating substrates to be cleaned with said wash liquor.

2.   A cleaning method according to claim 1, wherein the feed water is tap water having a water hardness of at least 7° FH.

3.   A cleaning method according to claim 1 or claim 2, wherein said cation resin materials comprises exchange resins which are in the $H^+$ form.

4.   A cleaning method according to any of claims 1-3, wherein said anion resins material comprises exchange resins which are in the $OH^-$ form.

5.   A cleaning method according to any of claims 1-4, wherein one or more bipolar membrane(s) are applied to facilitate the regeneration of the ion exchange resins.

6.   A cleaning method according to any of claims 1-5, wherein the resins are regenerated with the use of electrodeionisation (EDI).

7.   A cleaning method according to any of claims 1-6, wherein said cation exchange resin is a weakly acidic resin.

8.   A cleaning method according to any of claims 1-6, wherein the cation exchange resin is a weakly acidic resin and the anion exchange resin is a strongly basic resin.

9.   A cleaning method according to any of claims 1-6, wherein said cation exchange resin is a weakly acidic resin and said anion exchange resin is a weakly basic resin.

10. A cleaning method according to any of claims 1-6, wherein said cation exchange resin is a strongly acidic resin and said anion exchange resin is a strongly basic resin.

11. A cleaning method according to any of claims 1-6, wherein the cationic exchange resin is weakly acidic and the anion exchange resin is weakly basic, and wherein the feed water is first contacted with a weakly basic anion exchange resin, prior to step (i) of said method.

12. A cleaning method according to any of claims 1-11, in which the conductivity of the feed water is more than 50 micro Siemens cm$^{-1}$, preferably more than 100 micro Siemens cm$^{-1}$ and more preferred more than 200 micro Siemens cm$^{-1}$.

13. A cleaning method according to any of claims 1-12, in which the hardness of the WAW is less than 2°FH, preferably less than 1°FH.

14. A cleaning method according to any of claims 1-13, in which the pH of the WAW is higher than 9.5.

15. A cleaning method according to any of claims 1-14, in which the total volume of the resin material contacted by the water being treated is smaller than 4 L, preferably smaller than 3 L and more preferably smaller than 2 L but larger than 0.1 L.

16. A cleaning method according to any of claims 1-15, in which the flow rate of the feed water is higher than 0.25 L min$^{-1}$, preferably higher than 1.0 L min$^{-1}$. and more preferably higher than 2 L min$^{-1}$, but lower than 15 L min$^{-1}$.

17. A cleaning method according to any of claims 1-16, in which the contact time between feed water and resin material is larger than 0.01 min., more preferably larger than 0.1 min. and most preferably larger than 0.3 min., but lower than 2 min.

18. A cleaning method according to any of claims 1-17, in which the average particle size of the ion exchange resins is larger than 0.05 mm, preferably larger than 0.1 mm and more preferably larger than 0.5 mm, but smaller than 10 mm.

19. A cleaning method according to any of claims 1-18, in which the porosity of the ion exchange compartments containing the resin material is smaller than 0.8, preferably smaller than 0.6, and higher than 0.2.

20. A cleaning method according to any of claims 1-19, wherein the LEIP comprises 0 to 5 wt.% of pH modifier.

21. A cleaning method according to any of claims 1-20, wherein step (iii) of said method is carried out in a household cleaning appliance, preferably a fabric- or a dishwashing machine.

**Patentansprüche**

1. Reinigungsverfahren umfassend die Schritte von

   (i) aufeinanderfolgendem Inkontaktbringen von Speisewasser mit einem oder mehreren Sätzen von erstens einem Kationenaustauscherharz-Material und zweitens einem Anionenaustauscherharz-Material, um Wasser mit verstärkter Waschwirkung (WAW) zu erzeugen, das eine Wasserhärte von weniger als 5° FH und einen pH Wert, der mehr als eine 0,5 pH- Einheit unterschiedlich von dem des Speisewassers ist, aufweist, wobei der pH-Wert größer als 8,5 ist, wobei die Harze durch den Einsatz eines elektrischen Feldes regeneriert werden;
   (ii) Mischen des WAW mit einem sich wenig auf die Umwelt auswirkenden Reinigungsprodukt (LEIP), das 0 bis 5 Gewichts-% Builder, bezogen auf die gesamte LEIP Zusammensetzung, enthält und mindestens 10 Gewichts-%, vorzugsweise mindestens 25 Gewichts-%, bevorzugter mindestens 40 Gewichts-% an Tensid umfasst, um eine Waschlauge zu erhalten; und
   (iii) Behandeln von mit der Waschlauge zu reinigenden Substraten.

2. Reinigungsverfahren gemäß Anspruch 1, wobei das Speisewasser Leitungswasser ist, das eine Wasserhärte von mindestens 7° FH hat.

3. Reinigungsverfahren gemäß Anspruch 1 oder 2, wobei die Kationenharz-Materialien Austauscherharze umfassen, die in der H$^+$-Form vorliegen.

4. Reinigungsverfahren gemäß irgendeinem der Ansprüche 1-3, wobei das Anionenharz- Material Austauscherharze umfasst, die in der OH$^-$-Form vorliegen.

5. Reinigungsverfahren gemäß irgendeinem der Ansprüche 1-4, wobei eine oder mehrere bipolare Membran(e) eingesetzt werden, um die Regeneration der Ionenaustauschharze zu unterstützen.

6. Reinigungsverfahren gemäß irgendeinem der Ansprüche 1-5, wobei die Harze durch den Einsatz der Elektrodeionisation (EDI) regeneriert werden.

7. Reinigungsverfahren gemäß irgendeinem der Ansprüche 1-6, wobei das Kationenaustauscherharz ein schwach saures Harz ist.

8. Reinigungsverfahren gemäß irgendeinem der Ansprüche 1-6, wobei das Kationenaustauscherharz ein schwach saures Harz ist und das Anionenaustauscherharz ein stark basisches Harz ist.

9. Reinigungsverfahren gemäß irgendeinem der Ansprüche 1-6, wobei das Kationenaustauscherharz ein schwach saures Harz ist und das Anionenaustauscherharz ein schwach basisches Harz ist.

10. Reinigungsverfahren gemäß irgendeinem der Ansprüche 1-6, wobei das Kationenaustauscherharz ein stark saures Harz ist und das Anionenaustauscherharz ein stark basisches Harz ist.

11. Reinigungsverfahren gemäß irgendeinem der Ansprüche 1-6, wobei das Kationenaustauscherharz schwach sauer und das Anionenaustauscherharz schwach basisch ist und wobei das Speisewasser vor Schritt (i) des Verfahrens zuerst mit einem schwach basischen Anionenaustauscherharz in Kontakt gebracht wird.

12. Reinigungsverfahren gemäß irgendeinem der Ansprüche 1-11, in dem die Leitfähigkeit des Speisewassers größer als 50 Mikrosiemens cm$^{-1}$, vorzugsweise größer als 100 Mikrosiemens cm$^{-1}$ und besonders bevorzugt größer als 200 Mikrosiemens cm$^{-1}$ ist.

13. Reinigungsverfahren gemäß irgendeinem der Ansprüche 1-12, in dem die Härte des WAW weniger als 2° FH, vorzugsweise weniger al 1° FH ist.

14. Reinigungsverfahren gemäß irgendeinem der Ansprüche 1-13, in dem der pH des WAW größer als 9,5 ist.

15. Reinigungsverfahren gemäß irgendeinem der Ansprüche 1-14, in dem das gesamte Volumen an Harz-Material, das mit dem zu behandelnden Wasser in Kontakt gebracht wird, kleiner als 4 L, vorzugsweise kleiner als 3 L und bevorzugter kleiner als 2 L, aber größer als 0,1 L ist.

16. Reinigungsverfahren gemäß irgendeinem der Ansprüche 1-15, in dem die Durchflussrate des Speisewassers höher als 0,25 L min$^{-1}$, vorzugsweise höher als 1,0 L min$^{-1}$ und bevorzugter höher als 2,0 L min$^{-1}$, aber niedriger als 15 L min$^{-1}$ ist.

17. Reinigungsverfahren gemäß irgendeinem der Ansprüche 1-16, in dem die Kontaktzeit zwischen Speisewasser und Harz-Material größer als 0,01 min, bevorzugter größer als 0,1 min und höchst bevorzugt größer als 0,3 min, aber niedriger als 2 min, ist.

18. Reinigungsverfahren gemäß irgendeinem der Ansprüche 1-17, in dem die durchschnittliche Teilchengröße der Ionenaustauscherharze größer als 0,05 mm, vorzugsweise größer als 0,1 mm und bevorzugter größer als 0,5 mm, aber kleiner als 10 mm, ist.

19. Reinigungsverfahren gemäß irgendeinem der Ansprüche 1-18, in dem die Porosität der Ionenaustauschkammern, enthaltend das Harz-Material, kleiner als 0,8, vorzugsweise kleiner als 0,6 und größer als 0,2 ist.

20. Reinigungsverfahren gemäß irgendeinem der Ansprüche 1-19, wobei das LEIP 0 bis 5 Gewichts-% an pH-Modifikator umfasst.

21. Reinigungsverfahren gemäß irgendeinem der Ansprüche 1-20, wobei Schritt (iii) des Verfahrens in einem Haushaltsreinigungsgerät, bevorzugt einer Textilwasch- oder Geschirrspülmaschine, ausgeführt wird.

**Revendications**

1. Procédé de nettoyage comprenant les étapes suivantes

    (i) la mise en contact d'eau d'alimentation de manière successive avec un ou plusieurs ensembles, en premier lieu, de matériau de résine échangeuse de cations et en second lieu, de matériau de résine échangeuse d'anions afin de produire de l'eau amplifiée de lavage (WAW) ayant une dureté de l'eau inférieure à 5° FH et une valeur de pH qui est supérieure à 0,5 pH-unité différente de celle de l'eau d'alimentation, ladite valeur de pH étant supérieure à 8,5, moyennant quoi les résines sont régénérées avec l'utilisation d'un champ électrique ;
    (ii) le mélange de ladite WAW avec un produit détergent à faible impact environnemental (LEIP) contenant 0 à 5 % en poids d'adjuvant sur la composition LEIP totale et comprend au moins 10 % en poids, de préférence au moins 25 % en poids, plus préférablement au moins 40 % en poids, de tensioactif, pour obtenir une liqueur de lavage ; et
    (iii) le traitement des substrats devant être nettoyés avec ladite liqueur de lavage.

2. Procédé de nettoyage selon la revendication 1, dans lequel l'eau d'alimentation est de l'eau du robinet ayant une dureté de l'eau d'au moins 7° FH.

3. Procédé de nettoyage selon la revendication 1 ou la revendication 2, dans lequel lesdits matériaux de résines échangeuses de cations comprennent des résines échangeuses qui sont sous la forme $H^+$.

4. Procédé de nettoyage selon l'une quelconque des revendications 1 à 3, dans lequel ledit matériau de résines d'anion comprend des résines échangeuses qui sont sous la forme $OH^-$.

5. Procédé de nettoyage selon l'une quelconque des revendications 1 à 4, dans lequel une ou plusieurs membranes bipolaires sont appliquées pour faciliter la régénération des résines échangeuses d'ions.

6. Procédé de nettoyage selon l'une quelconque des revendications 1 à 5, dans lequel les résines sont régénérées en utilisant l'électrodésionisation (EDI).

7. Procédé de nettoyage selon l'une quelconque des revendications 1 à 6, dans lequel ladite résine échangeuse de cations est une résine faiblement acide.

8. Procédé de nettoyage selon l'une quelconque des revendications 1 à 6, dans lequel la résine échangeuse de cations est une résine faiblement acide et la résine échangeuse d'anions est une résine fortement basique.

9. Procédé de nettoyage selon l'une quelconque des revendications 1 à 6, dans lequel ladite résine échangeuse de cations est une résine faiblement acide et ladite résine échangeuse d'anions est une résine faiblement basique.

10. Procédé de nettoyage selon l'une quelconque des revendications 1 à 6, dans lequel ladite résine échangeuse de cations est une résine fortement acide et ladite résine échangeuse d'anions est une résine fortement basique.

11. Procédé de nettoyage selon l'une quelconque des revendications 1 à 6, dans lequel la résine échangeuse de cations est faiblement acide et la résine échangeuse d'anions est faiblement basique, et dans lequel l'eau d'alimentation est tout d'abord mise en contact avec une résine échangeuse d'anions faiblement basique, avant l'étape (i) dudit procédé.

12. Procédé de nettoyage selon l'une quelconque des revendications 1 à 11, dans lequel la conductivité de l'eau d'alimentation est supérieure à 50 micro-Siemens $cm^{-1}$, de préférence supérieure à 100 micro-Siemens $cm^{-1}$ et de manière encore préférée, supérieure à 200 micro-Siemens $cm^{-1}$.

13. Procédé de nettoyage selon l'une quelconque des revendications 1 à 12, dans lequel la dureté de la WAW est inférieure à 2°FH, de préférence, inférieure à 1°FH.

14. Procédé de nettoyage selon l'une quelconque des revendications 1 à 13, dans lequel le pH de la WAW est supérieur à 9,5.

15. Procédé de nettoyage selon l'une quelconque des revendications 1 à 14, dans lequel le volume total du matériau de résine en contact avec l'eau étant traité est inférieur à 4 L, de préférence, inférieur à 3 L et plus préférablement, inférieur à 2 L mais supérieur à 0,1 L.

16. Procédé de nettoyage selon l'une quelconque des revendications 1 à 15, dans lequel le débit de l'eau d'alimentation est supérieur à 0,25 L min$^{-1}$, de préférence, supérieur à 1,0 L min$^{-1}$ et plus préférablement, supérieur à 2 L min$^{-1}$, mais inférieur à 15 L min$^{-1}$.

17. Procédé de nettoyage selon l'une quelconque des revendications 1 à 16, dans lequel le temps de contact entre l'eau d'alimentation et le matériau de résine est supérieur à 0,01 min, plus préférablement, supérieur à 0,1 min, et de manière préférée entre toutes, supérieur à 0,3 min, mais inférieur à 2 min.

18. Procédé de nettoyage selon l'une quelconque des revendications 1 à 17, dans lequel la taille de particule moyenne des résines échangeuses d'ions est supérieure à 0,05 mm, de préférence, supérieure à 0,1 mm et encore plus préférablement, supérieure à 0,5 mm, mais inférieure à 10 mm.

19. Procédé de nettoyage selon l'une quelconque des revendications 1 à 18, dans lequel la porosité des compartiments échangeurs d'ions contenant le matériau de résine est inférieure à 0,8, de préférence, inférieure à 0,6 et supérieure à 0,2.

20. Procédé de nettoyage selon l'une quelconque des revendications 1 à 19, dans lequel le LEIP comprend 0 à 5 % en poids de modificateur de pH.

21. Procédé de nettoyage selon l'une quelconque des revendications 1 à 20, dans lequel l'étape (iii) dudit procédé est effectuée dans un appareil de nettoyage domestique, de préférence, une machine à laver le linge ou la vaisselle.

# Fig.1.

Feed Water          Product Water

n

# Fig.2.

Feed Water          Product Water

n

# Fig.3.

Feed Water          Product Water

n

⬡ Strongly Acidic
✳ Weakly Acidic
◎ Weakly Basic
⊘ Strongly Basic

# Fig.4.

Feed
Water

n

Product
Water

# Fig.5.

Feed
Water

Product
Water

n

# Fig.6.

Feed
Water

n

Product
Water

🌐 Strongly Acidic    ◎ Weakly Basic

✳ Weakly Acidic    ⊘ Strongly Basic

## Fig.7.

Feed
Water

Product
Water

## Fig.8.

Feed
Water

Product
Water

## Fig.9.

Feed
Water

Product
Water

◍ Strongly Acidic
✳ Weakly Acidic
◎ Weakly Basic
◑ Strongly Basic

# Fig.10.

Feed
Water

Product
Water

n

# Fig.11.

Feed
Water

Product
Water

n

# Fig.12.

Feed
Water

Product
Water

n

⊛ Strongly Acidic
✳ Weakly Acidic
◎ Weakly Basic
⊘ Strongly Basic

## Fig.13.

Feed Water

Product Water

n

## Fig.14.

Feed Water

Product Water

n

## Fig.15.

Feed Water

Product Water

n

🕸 Strongly Acidic
🕸 Weakly Acidic
◎ Weakly Basic
🖉 Strongly Basic

# Fig.16.

Feed
Water

Product
Water

n

# Fig.17.

Feed
Water

Product
Water

n

# Fig.18.

Feed
Water

n

Product
Water

⬤ Strongly Acidic

✳ Weakly Acidic

◎ Weakly Basic

⬤ Strongly Basic

Fig.19.  Feed Water

Product Water

Fig.20.  Feed Water

Product Water

Fig.21.

Feed Water

Product Water

Strongly Acidic
Weakly Acidic
Weakly Basic
Strongly Basic

# Fig.22.

Legend:
- ▨ Tap Water + OMO Colour
- ▧ Tap Water + LEIP
- ▨ WAW + LEIP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6557382 A
- WO 0130229 A
- US 2825666 A
- WO 0130228 A
- US 5460725 A
- US 5444031 A
- US 5356849 A, Matviya
- US 4144226 A
- US 4146495 A
- EP 0384070 A
- US 3929678 A, Laughlin
- EP 0419036 A